(19) Europäisches Patentamt
European Patent Office
Office européen des brevets

(11) EP 1 043 356 B1

(12) EUROPEAN PATENT SPECIFICATION

(45) Date of publication and mention of the grant of the patent:
**09.12.2009 Bulletin 2009/50**

(51) Int Cl.:
***C08K 3/26*** *(2006.01)* ***C08L 83/04*** *(2006.01)*

(21) Application number: **00302439.5**

(22) Date of filing: **24.03.2000**

(54) **Low modulus, one part RTV sealant compositions**

Kaltvulkanisierende Einkomponenten-Dichtungsmassen mit niedrigem Elastizitätsmodul

Compositions d'étanchéité monocomposantes à faible module d' élasticité, vulcanisables à froid

(84) Designated Contracting States:
**DE FR GB**

(30) Priority: **09.04.1999 US 290018**

(43) Date of publication of application:
**11.10.2000 Bulletin 2000/41**

(73) Proprietor: **Momentive Performance Materials Inc.**
**Albany, NY 12211 (US)**

(72) Inventor: **Lucas, Gary Morgan**
**Glenville,**
**New York 12302 (US)**

(74) Representative: **Herrmann, Uwe et al**
**Lorenz - Seidler - Gossel**
**Widenmayerstrasse 23**
**80538 München (DE)**

(56) References cited:
**EP-A- 0 384 609** **EP-A- 0 507 177**
**US-A- 4 528 353**

- **PATENT ABSTRACTS OF JAPAN vol. 016, no. 419 (C-0981), 3 September 1992 (1992-09-03) & JP 04 142373 A (HAYASHIKANE PEINTO KK), 15 May 1992 (1992-05-15)**

EP 1 043 356 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to one component, room temperature vulcanizable ("RTV") silicone sealant compositions.

One component RTV silicone sealant compositions that are stored under anhydrous conditions and that cure upon exposure to water or water vapor at room temperature to yield elastomers are well known. Such sealant compositions are typically prepared by combining a diorganopolysiloxane polymer having reactive end groups with a polyfunctional organosilicon compound having one functional group per molecule of polyfunctional organosilicon compound that is capable of undergoing a reaction with the endgroups of the diorganopolysiloxane polymer to thereby form a polyfunctional organopolysiloxane polymer having two or more functional groups per molecule of polyfunctional organosilicon compound, each of which is capable of undergoing a condensation reaction at room temperature in the presence of moisture to thereby form a crosslinked organopolysiloxane polymer network. Such sealant compositions are widely used in a variety of caulking and sealing applications, such as, for example, as elastic sealing materials for sealing gaps between, for example, various structural bodies and building materials in buildings, between plumbing fixtures and various building structural bodies, between structural and sheathing panels of vehicles, such as automobiles and airplanes, as well as those of various electric appliances and machines.

One component RTV silicone sealant compositions that exhibit a low tensile modulus are highly desirable in those applications where the sealant composition is used to seal a gap between adjacent substrates, for example, exterior sheathing and trim components of a building, which will undergo thermal cycling. In such applications, a combination of low tensile modulus and high adhesion to a variety of substrates is particularly desirable, in order to allow a seal to be maintained between the substrates as the dimensions of the gap between the substrates changes due to expansion and contraction of the substrates with changes in temperature.

While low modulus one component RTV silicone sealant compositions useful in such applications are known, see, for example, U.S. Patent Nos. 4,323,489 and 4,810,748, there is a continuing interest in development of low modulus one part RTV silicone sealant compositions that exhibit improved properties, particularly those that exhibit low modulus and high adhesion to a variety of substrates.

EP-A-0507177 discloses a fixing material which hardens in the presence of moisture, **characterised in that** it contains silicone resins which contain alkoxy functional groups and have the empirical formula:

$$R_xSi(OR')_yO_{\frac{4-x-y}{2}}$$

where R is an alkyl or phenyl group, R' is a methyl or ethyl group, x has a value of 0.75-1.75 and y has a value of 0.3 - 2.0 as well as an activator and if appropriate plasticisers, fillers and pigments.

EP-A-0384609 discloses curable polysiloxane compositions filled with a mixture of two types of finely divided calcium carbonate. The curable polysiloxane comprises 100 parts by weight of a hydroxypolysiloxane with from 5 to 12 parts by weight of a curing agent comprising a silane of the formula $R_a$,$R'_b$Si or a siloxane having units

$$R_aR'_cSiO_{\frac{(4-(a+c))}{2}}$$

wherein each R represents a monovalent hydrocarbon group, each R' represents an hydroxy, alkoxy, or alkoxyalkoxy group, $\underline{a}$ + $\underline{b}$ = 4, $\underline{a}$ has a value 0 or 1, $\underline{b}$ has a value 3 or 4, $\underline{c}$ has a value 1, 2 or 3 and $\underline{a}$ + $\underline{c}$ is not greater than 3 as exemplified by methyl trimethoxy silane, together with a catalytic amount of a titanium or tin compound for promoting curing of the product in presence of moisture of the atmosphere. The composition contains, per 100 parts by weight of the polysiloxane, from 50 to 200 parts by weight of a filler comprising a mixture of 10 to 80% by weight of the mixture of a calcium carbonate composed principally of particles having a surface area from 10 $m^2$/g to 30 $m^2$/g and 20 to 90% by weight of the mixture of a calcium carbonate composed principally of particles having a surface area from 0.5 $m^2$/g to 12 $m^2$/g. The compositions are applicable as sealant compositions having a desirable blend of properties including adhesion to various surfaces.

JP-A-04142373 discloses a coating material which is safe, does not cause environmental pollution, and imparts long-term antifouling properties to an underwater or marine construction by compounding a room-temperature-curable silicone rubber composition with specific polyether-modified silicone oil.

In a first aspect, the present invention is directed to a one component, room temperature vulcanizable silicone sealant composition, comprising a cross-linkable organopolysiloxane polymer; a polyether siloxane; and a particulate calcium carbonate filler having an average particle size less than or equal to 4.5 μm (microns), and a condensation

catalyst, as defined in claim 1.

A second aspect of the present invention is directed to a method for sealing a gap between a first substrate and a second substrate, wherein the second substrate is spaced apart from the first substrate to thereby form the gap, comprising applying an amount of a one component, room temperature vulcanzable silicone sealant composition effective to bridge the gap and allowing the composition to cure, wherein the composition, when cured, exhibits a tensile modulus of less than 345 KPa (50 pounds per square inch) measured at 100% elongation and that forms an adhesive bond to a variety of substrates having a peel strength of greater than or equal to 268 Kg/m (15 pounds per linear inch).

Another aspect of the present invention is directed to an assembly, comprising a first substrate, a second substrate, spaced apart from the first substrate, and a silicone elastomer having a modulus of less than 345 KPa (50 pounds per square inch) measured at 100% elongation disposed between the first and second substrates and bonded to each of the substrates, wherein the peel strength of the bonds between the sealant and each of the respective substrates is greater than or equal to 268kg/m (15 pounds per linear inch).

As referred to herein, a "low modulus" sealant is one characterized by a tensile stress measured at 100% elongation (WPSTM E-1) of less than or equal to 345kPa (50 pounds per square inch ("psi")).

As used herein, the term "stable", when used in reference to a 1-part polyalkoxy terminated RTV composition, means a moisture curable composition capable of remaining substantially unchanged while excluded from atmospheric moisture that cures to a tack free elastomer when exposed to atmospheric moisture and that exhibits a tack free time that remain substantially unchanged after a minimum 12 month anhydrous storage at ambient temperatures. An accelerated shelf stability test measures this property by heating the uncured RTV composition, packaged in a sealed aluminum tube, at 70 °C for 7 days. RTV compositions that have tack free time substantially unchanged after the 70 °C heat cycle are considered stable.

As used herein, an RTV silicone sealant is considered to have excellent primerless adhesion if, when tested according to WPSTM C-628, a minimum of 268 kg/m (15 pounds per linear inch ("ppi")) and 50% cohesive failure is obtained to suitable substrates including aluminum, glass, polyacrylate, PVC, polycarbonate, and concrete.

In a preferred embodiment, the sealant composition of the present invention comprises, based on 100 parts by weight ("pbw") of the diorganopolysiloxane polymer, from 100 to 300 pbw, preferably from 125 to 250 pbw, and most preferably from 150 to 200 pbw of the particulate calcium carbonate and from 0.03 to 3.5 pbw, preferably from 0.30 to 3.0 pbw, and most preferably from 0.40 to 2.5 pbw of the polyether siloxane.

The crosslinkable organopolysiloxane polymer may be any organopolysiloxane polymer having greater than two reactive functional groups per molecule. Suitable reactive functional groups are those which, in the presence of moisture and, preferably, a suitable catalyst, allow room temperature polymerization of the organopolysiloxane polymer and include, for example, H, alkoxy, oximo, amino, enoxy, aminoxy and acyloxy groups.

In a preferred embodiment a suitable cross-linkable organopolysiloxane polymer is formed during compounding of the composition of the present invention by in situ reaction of a diorganopolysiloxane polymer with a polyfunctional organosilicon compound. In a preferred embodiment, the crosslinkable organopolysiloxane polymer of the composition of the present invention is made by in situ reaction of 100 pbw of the diorganopolysiloxane polymer with from about 1.0 to about 30 pbw, more preferably from about 2.0 to about 15 pbw, and most preferably from about 3.0 to about 10 pbw of the polyfunctional organosilicon compound during compounding of the composition of the present invention.

The diorganopolysiloxane polymer may be any diorganopolysiloxane polymer having end-groups, such as, for example silanol groups, which are reactive with the polyfunctional organosilicon compound under processing conditions anticipated during compounding of the composition of the present invention.

In a preferred embodiment, the diorganopolysiloxane polymer exhibits a viscosity varying from 50,000 to 1,000,000 mPa.s (centiPoise ("cp")), preferably from 80,000 to 500,000 mPa.s and more preferably from 100,000 to 200.000 mPa.s, at 25 °C.

In a preferred embodiment, the organic substituent groups of the diorganopolysiloxane polymer are monovalent hydrocarbon radicals. As used herein, the terminology "monovalent hydrocarbon radicals" means ($C_1$-$C_8$)alkyl radicals, such as, for example, methyl, ethyl, propyl, hexyl, octyl; cyclo($C_5$-$C_{10}$)alkyl radicals such as, for example, cyclohexyl, cyclopentyl ; alkenyl radicals, such as, for example, vinyl, allyl; aryl radicals such as, for example, phenyl, methylphenyl, ethylphenyl; and fluoroalkyl radicals such as, for example, 3,3,3-trifluoropropyl.

In a highly preferred embodiment, the diorganopolysiloxane is a silanol-terminated diorganopolysiloxane polymer according to structural formula (I):

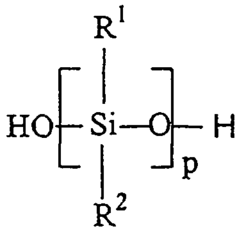

(I)

wherein:

$R^1$ and $R^2$ are each independently monovalent hydrocarbon radicals; and p is selected to provide a polymer that exhibits a viscosity 50,000 to 1,000,000 cp at 25 °C.

Suitable monovalent hydrocarbon groups include acyclic hydrocarbon-radicals, monovalent alicyclic hydrocarbon radicals, monovalent and aromatic hydrocarbon radicals.

In a preferred embodiment, $R^1$ and $R^2$ are each independently ($C_1$-$C_8$)alkyl, aryl or fluoroalkyl. As used herein, "($C_1$-$C_8$)alkyl" means a straight or branched chain alkyl group containing from 1 to 8 carbon atoms per group, such as, for example, methyl, ethyl, n-butyl, s-butyl, t-butyl, hexyl, octyl.

As used herein, "aryl" means a hydrocarbon radical containing one or more aromatic rings per radical, which may optionally be substituted on the one or more aromatic rings with one or more alkyl groups, each preferably containing from 2 to 6 carbon atoms per group and which, in the case of two or more rings, may be fused rings, such as, for example, phenyl, tolyl, xylyl, mesityl, isopropyl phenyl, naphthyl.

As used herein, "fluoroalkyl" means an alkyl group substituted with one or more fluorine atom per group, such as, for example, fluoromethyl, trifluoropropyl.

In a highly preferred embodiment, at least 50% of the total number of $R^1$ and $R^2$ radicals are ($C_1$-$C_8$)alkyl, even more preferably methyl, and the remaining groups are each aryl, more preferably, phenyl.

In an alternative highly preferred embodiment, the $R^1$ and $R^2$ radicals are each independently ($C_1$-$C_8$)alkyl or fluoroalkyl.

Suitable polyfunctional organosilicon compounds are those that contain a first reactive functional group that is reactive with the end groups of the diorganopolysiloxane polymer under anticipated processing conditions and two or more second functional groups per molecule, each of which is not reactive under anticipated processing conditions, but is reactive, in the presence of a suitable catalyst, under room temperature vulcanization conditions.

In a preferred embodiment, the polyfunctional organosilicon compound is one according to the structural formula (II):

$$R^3_{(4-a)}\text{-Si-}R^4_a \qquad \text{(II)}$$

wherein:

each $R^3$ is independently H, alkoxy, oximo, amino, aminoxy or acyloxy;each $R^4$ is independently ($C_1$-$C_8$)alkyl, ($C_2$-$C_8$) alkenyl, aryl or fluoroalkyl; and $0 \leq a \leq 2$.

In a preferred embodiment, each $R^3$ is alkoxy, more preferably ($C_1$-$C_8$)alkoxy, even more preferably, methoxy or ethoxy. Preferred polyalkoxy crosslinking agents include vinyltrimethoxysilane, tetramethoxysilane, methyltriethoxysilane, vinyltrimethoxysilane, tetraethoxysilane, methyltrimethoxysilane. Most preferably, the polyalkoxy crosslinking agent is methyltrimethoxysilane.

The particulate calcium carbonate has an average particle size less than or equal to 4.5 $\mu$m (microns). In a preferred embodiment, the particulate calcium carbonate is treated with stearic acid. Suitable particulate calcium carbonate is commercially available from a number of sources.

Polyether siloxanes suitable as the polyether siloxane component of the composition of present invention are those polyether substituted organosiloxanes that, when present in the composition of the present invention, reduce the modulus of the cured elastomer formed from the composition, relative to the modulus of a cured elastomer formed form an composition analogous to the composition of the present invention, but lacking the silicone polyether low modulus additive component.

In a preferred embodiment, the polyether siloxane comprises one according to structural formula (III):

$M_bD_dD^*_eM^*_{2-b}$ (III)

wherein:

M is $R^5{}_3SiO_{1/2}$;
D is $R^6{}_2SiO_{2/2}$;
M* is $R^7{}_3SiO_{1/2}$;
D* is $R^8{}_2S{:}O_{2/2}$;

each $R^5$ and $R^6$ is independently a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;
each $R^7$ is independently a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl; or $-(CH_2)_f-O-(C_2H_4O)_g-(C_3H_6O)_h-(C_jC_{2j}O)_i-R^9$, provided that at least one $R^7$ is $-(CH_2)_f-O-(C_2H_4O)_g-(C_3H_6O)_h-(C_jO_{2j}O)_i-R^9$;
each $R^8$ is independently a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl; or $-(CH_2)_f-O-(C_2H_4O)_g-(C_3H_6O)_h-(C_jO_{2j}O)_i-R^9$, provided that at least one $R^8$ is $-(CH_2)_f-O-(C_2H_4O)_g-(C_3H_6O)_h-(C_jO_{2j}O)_i-R^9$;
$R^9$ is hydroxy, alkoxy or a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;
b, d, e, f, g, h, i, j are each integers, wherein

$$0 \leq b \leq 2;$$

$$1 \leq d \leq 5;$$

$$1 \leq e \leq 5;$$

$$1 \leq f \leq 12;$$

$$0 \leq g \leq 15;$$

$$0 \leq h \leq 15,$$

$$\leq i \leq 15;$$

and

$$4 \leq j \leq 8,$$

provided that $(g + h + i) \geq 1$.

The composition further comprises a condensation cure catalyst. Suitable condensation cure catalyst are those that, in the presence of moisture, catalyze the room temperature crosslinking of the crosslinkable organopolysiloxane polymer.

The condensation cure catalyst is one according to structural formula (IV):

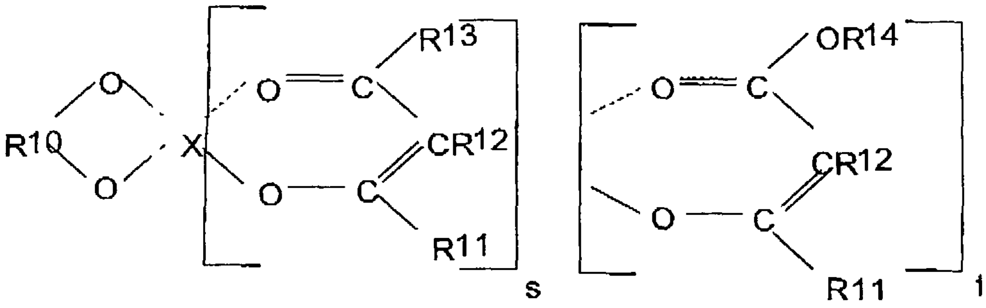

(IV)

wherein:

X is titanium;

$R^{10}$ is a divalent hydrocarbon radical of 2 to 20 carbon atoms, more preferably 2-10 carbon atoms, per group, optionally substituted with halo, cyano, nitro, carboxyl, carboxy ester, acyl halohydrocarbon and hydrocarbon substituent groups of up to 8 carbon atoms per group.

$R^{11}$ and $R^{13}$ are each independently a monovalent hydrocarbon radical selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;

$R^{12}$ is H or a monovalent hydrocarbon radical selected from $C_1$-$C_8$ alkyl, $C_5$-$C_{10}$ cylcloalkyl, vinyl, allyl, aryl selected from phenyl or naphthyl optionally substituted with one or more alkyl groups having from 1 to 6 carbon atoms per group and fluoroalkyl selected from fluoromethyl and trifluoropropyl;

$R^{14}$ is a monovalent hydrocarbon radical selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl, amino, ether, or a polyether group of the formula $(C_qH_{2q}O)_vR^{15}$;

$R^{15}$ is a monovalent hydrocarbon radical selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;

q and v are each integers, wherein $2 \leq q \leq 4$ and $1 \leq v \leq 20$;

s and t are each numbers, wherein $0.7 \leq s \leq 1.3$; and $0.8 \leq t \leq 1.2$.

In a preferred embodiment, s is 1 and t is 1.

In a preferred embodiment $R^{10}$ is propyl, $R^{12}$ is H, $R^{11}$ and $R^{13}$ are each methyl and $R^{14}$ is ethyl.

The preparation of compounds according to structural formula (IV) is described in U.S. Patent Nos. 3,689,454 and 3,779,986.

In a preferred embodiment, the composition of the present invention comprises from 0.1 to 10 pbw, preferably from 1 to 7 pbw, and most preferably from 3 to 5 pbw of the condensation cure catalyst.

The composition may, optionally, further comprise a reinforcing filler. Suitable reinforcing fillers include silica, precipitated silica, hydrophobicized precipitated silica, fumed silica, hydrophobicized fumed silica, carbon black, titanium dioxide, ferric oxide, aluminum oxide, as well as other metal oxides and are commercially available from a number of sources. In a preferred embodiment, the reinforcing filler comprises fumed silica.

In a preferred embodiment, the composition of the present invention comprises, based on 100 pbw of the diorganopolysiloxane polymer, from 3 to 40 pbw, more preferably from 8 to 30 pbw, and most preferably from 10 to 25 pbw of a reinforcing filler.In a preferred embodiment, the composition of the present invention comprises a triorganosilyl end-stopped diorganopolysiloxane fluid, such as for example, a trimethylsilyl-terminated dimethylpolysiloxane fluid, as a plasticizer. Preferably, the triorganosilyl end-stopped diorganopolysiloxane fluid has a viscosity of from 10 to 5000 mPa.s, more preferably from 10 to 1000 mPa.s (cp), at 25 °C.

In a preferred embodiment, the composition of the present invention comprises, based on 100 pbw of the diorganopolysiloxane polymer, from 0.1 pbw to 100 pbw, more preferably from 10 pbw to 75 pbw, and most preferably

from 30 pbw to 60 pbw of the triorganosilyl end-stopped diorganopolysiloxane fluid.

In a preferred embodiment, the composition of the present invention further comprises an adhesion promoter. Suitable adhesion promoters are those that when present in the composition of the present invention improve the adhesion of the cured composition to one or more substrates without detrimentally effecting the other desirable properties of the composition. Suitable adhesion promoters are described, for example, in US Patent No. 4,528,353. In a preferred embodiment, the adhesion promoter comprises an organofunctional polyalkoxysilane according to structural formula (V):

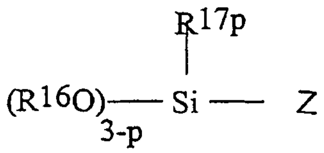

(V)

wherein:

$R^{16}$ and $R^{17}$ are each independently monovalent $(C_1-C_8)$hydrocarbon radicals,

Z is a saturated, unsaturated, or aromatic hydrocarbon radical, which may optionally be substituted with ether, epoxy, isocyanato, cyano, acryloxy, or acyloxy, and

p is an integer wherein $0 \leq p \leq 3$.

Suitable adhesion promoters include, for example, γ-aminopropylmethyldiethoxysilane, γ-aminopropylmethyldimethoxysilane, methacryloxyethyl-aminopropyltrimethoxysilane, methylaminopropyltrimethoxysilane, 1,3,5 trimethoxysilylpropylcyanurate, γ-glycidoxypropylethyldimethoxysilane, γ-glycidoxyethyltrimethoxysilane, β-(3,4-epoxycyclohexyl)propyl trimethoxysilane, (3,4-epoxycyclohexyl)ethylmethyldimethoxysilane, isocyanatopropyltriethoxysilane, isocyanatopropylmethyldimethoxysilane, β-cyanoethyltrimethoxysilane, β-cyanopropyltriethoxysilane, γ-acryloxypropyltrimethoxy silane, and γ-methacryloxypropylmethyldimethoxysilane.

In a preferred embodiment, triorganosilyl end-stopped diorganopolysiloxane is a compound according to the structural formula (VI):

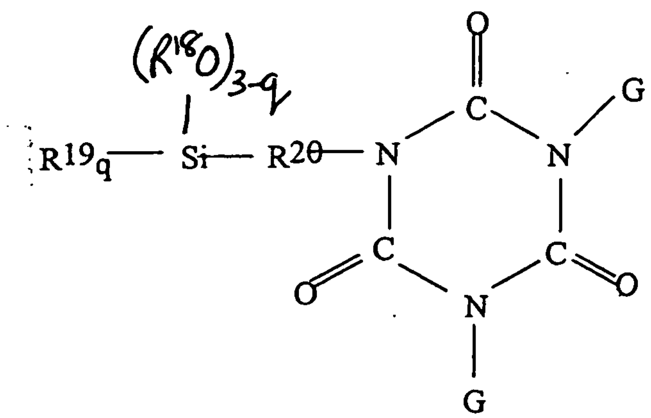

(VI)

wherein

$R^{18}$ and $R^{19}$ are each independently alkyl, cycloalkyl, fluoroalkyl, cyanoalkyl, alkenyl or aryl;

$R^{20}$ is a divalent hydrocarbon radical selected from alkylenearylene, alkylene, cycloalkylene, each of which may optionally be substituted with one or more halo groups;

each G is independently $(R^{18}O)_{3-p}$ - $R^{19}_p$ - Si - $R^{20}$ -, styryl, vinyl allyl, chloroallyl or cyclohexyl;

q is an integer, wherein $0 \leq q \leq 3$.

In a highly preferred embodiment, the adhesion promoter comprises one or more of 1,3,5-trismethoxysilylpropylisocyanurate,1,3,5-trismethoxysilylethyl-isocyanurate, 1,3,5-trismethyldimethoxysilylpropylisocyanurate, 1,3,5-trismethyldiethoxysilylpropylisocyanurate.

In a preferred embodiment, the composition of the present invention comprises, based on 100 pbw of the diorganopolysiloxane, from 0.01 pbw to 2.0 pbw, preferably from 0.1 to 1.0 pbw, and most preferably from 0.3 to 0.7 pbw of the organofunctional polyalkoxysilane.

The composition of the present invention may, optionally, further comprise one or more other components known in the art, such as, for example, dyes, pigments anti-oxidants, flame retardants, UV stabilizers, adhesion-enhancing agents, thermal stabilizing agents and biocides.

The composition of the present invention is used by exposing the composition to ambient moisture and allowing the composition to cure. Preferably, the composition is maintained in moisture-impervious packaging up until the time of use. In a preferred embodiment, the composition is used to seal a gap between a first substrate and a second substrate, wherein the second substrate is spaced apart from the first substrate to form a gap, by applying an amount of the composition effective to bridge the gap and allowing the composition to cure in place to form an elastomeric seal between the substrates.

In a preferred embodiment, the composition, when cured, exhibits a tensile modulus of less than 345kPa (50 pounds per square inch) measured at 100% elongation and, even more preferably, also forms an adhesive bond to a variety of substrates, such as for example, aluminum, glass, polyacrylate, PVC, pol carbonate, and concrete, having a peel strength of greater than or equal to 268 kg/m (15 pounds per linear inch),

Optionally, the composition of the present invention can be used in combination with an adhesion promoting primer.

EXAMPLE 1

Example 1 describes the preparation of a silicone-polyether polymer. To a glass lined reaction vessel fitted with dry nitrogen purge, agitator, reflux condenser, heat, and a vacuum source, was charged 115 pbw of polyglycol (WERMI 6585) and 29.6 pbw isopropyl alcohol. The mixture agitated and heated, at atmospheric pressure, to 85-90 °C. 0.008 pbw platinum catalyst was then charged to the reaction vessel. 55.1 pbw silicone hydride was then charged to the reaction vessel in two equal addition steps. The reaction mixture was agitated at 90 °C for 40 minutes after completing the silicone hydride addition. While agitating at 90 °C, a 250 mm Hg vacuum was pulled to strip out the isopropyl alcohol. Heating and agitation was continued, under vacuum, for 1 hour with a dry nitrogen sparge. After completing the isopropyl alcohol strip, the vacuum was broken with dry nitrogen and the product was filtered through white Filterite 1 micron elements yielding a hazy, water white liquid silicone-polyether having a room temperature viscosity of 550 mPa.s (cp.),

EXAMPLE 2

Example 2 describes the continuous production of 1-part, alkoxy curing, titanium chelate catalyzed, RTV silicone sealants using a 30mm Werner-Pfleiderer twin screw extruder.

Extruder barrels 1-9 were heated to 70 °C. Barrels 10-14 were cooled with - 10 °C glycol heat exchanging fluid. Continuously added to barrel 1 of the extruder were 27.4 percent by weight (wt%) of a silanol terminated polydimethylsiloxane polymer having a room temperature viscosity of 100,0000-120,000 mPa.s (cp), 5.0 wt% of an octamethylcyclotetrasiloxane-treated reinforcing fumed silica filler, 15 wt% of a trimethylsilyl terminated polydimethylsiloxane polymer having a viscosity of 100 mPas (cp), and 50 wt % of a stearic acid surface treated ground $CaCO_3$ having an average particle size of 18 μm (microns). $CaCO_3$ particle size was measured using a particle size analyzer (Micromeritics SediGraph 51000).

To barrel 7 of the extruder was continuously added 2.6 wt% of a liquid blend comprised of 32 wt% 1,3-propanedioxytitanium (ethylacetoacetate-aetyl acetonate), 57 wt% methyltrimethoxysilane, and 11 wt% tris-1,3,5-trimethoxysilylpropylisocyanurate. A de-airing vacuum was applied at barrel 11 of the extruder. The fully compounded RTV sealant exited the extruder at a temperature of 25°C to 35°C at a production rate of 18kg (40 pounds) per hour and was immediately packaged into moisture proof polyethylene cartridges for storage.

After standing for 4 days at room temperature, the RTV sealant of Example 2 was tested for modulus at 100% elongation (WPSTM E-1) after a 7 day cure at standard curing conditions (45-55 %RH and 65-75 °F.). Test results, for the RTV composition of Example 2, are given in TABLE I.

As shown in Table I below, the RTV sealant of Example 2 does not possess low modulus properties.

EXAMPLE 3

The composition of Example 3 is analogous to that of Example 2 except that the 18 μm (micron) $CaCO_3$ used in the composition of Example 2 was replaced by a variety of smaller particle size ground and precipitated stearic acid treated $CaCO_3$ as set forth below in TABLE I. $CaCO_3$ particle size was measured using a particle size analyzer (Micromeritics SediGraph 51000).

TABLE I

| Ex# | $CaCO_3$ , Average Particle Size (μm) | Modulus @ 100% elongation (psi) kPa |
|---|---|---|
| 2 | 18 | (123) 848 |
| 3A | 16 | (108) 745 |
| 3B | 14 | (105) 724 |
| 3C | 12 | (98) 676 |
| 3D | 10 | (102) 703 |
| 3E | 7 | (79) 545 |
| 3F | 6 | (75) 517 |
| 3G | 4.5 | (57) 393 |
| 3H | 1 | (59) 407 |
| 3I | 0.7 | (54) 372 |
| 3J | 0.3 | (54) 372 |
| 3K | 0.07 | (48) 331 |

As shown in TABLE 1, the compositions of Example 3, which contain $CaCO_3$ filler of average particle size of 6 μm (micron) or greater, do not possess low modulus properties. Compositions with $CaCO_3$ filler having an average particle size of 4.5 μm (micron) or less closely approach, but do not achieve target low modulus values.

EXAMPLES 4 AND 5

Example 4 is analogous to Example 2, except that 0.8 wt% of the polyether siloxane according to Example 1 and 26.6 wt% silanol terminated polydimethylsiloxane polymer were continuously added to barrel 1 of the extruder. 100% modulus results were measured, after a 7 day cure at standard conditions, and are reported in TABLE II. As shown below in TABLE II, the RTV sealant composition of Example 4, although showing a reduced 100% modulus value relative to Example 2, still does not possess target low modulus properties.

Example 5 is analogous to Example 3, except that the continuous addition of 0.8 wt% of the silicone-polyether polymer of Example 1 and 26.6 wt% silanol terminated polydimethylsiloxane polymer were added to barrel one of the extruder. 100% modulus results, after a 7 day cure at standard conditions, are shown in TABLE II below.

TABLE II

| Ex# | $CaCO_3$ , Average Particle Size (μm) | Modulus @ 100% elongation (psi) kPa |
|---|---|---|
| 4 | 18 | (108) 745 |
| 5A | 16 | (96) 662 |
| 5B | 14 | (101) 696 |
| 5C | 12 | (90) 621 |
| 5D | 10 | (93) 641 |
| 5E | 8 | (66) 455 |
| 5F | 7 | (66) 455 |
| 5G | 4.5 | (42) 290 |
| 5H | 1 | (40) 276 |
| 5I | 0.7 | (38) 262 |
| 5J | 0.3 | (36) 248 |
| 5K | 0.07 | (27) 186 |

As shown in TABLE II above, compositions containing both the silicone-polyether polymer of Example 1, and $CaCO_3$ extending fillers having an average particle size of 4.5 μm (microns) of less do achieve the target 100% modulus value of less than or equal to 345 kPa (50 psi).

EXAMPLE 6

Example 6 is analogous to Example 5G, combining various levels of the polyether siloxane polymer of Example 1 with 4.5 μm (micron) $CaCO_3$ as set forth below in TABLE III.

100% modulus (after a 7 day cure at standard conditions), and tack free times (WSPTM E-63) were determined. Results are reported in TABLE III. As shown in TABLE III, target low modulus properties are obtained with an amount of the polyether siloxane of Example 1 greater than or equal to 0.15 wt%. However, polyether siloxane levels greater than or equal to 0.8 wt% show reduced cure speed.

Also shown in TABLE III, are WPSTM C-628 peel adhesion values (using polyacrylate substrate) vs. polyether siloxane level. Table III shows that the presence of polyether siloxane does not negatively effect the primerless adhesion of the disclosed RTV sealant compositions to polyacrylate.

TABLE III

| Ex# | Silicone-Polyether Polymer (wt%) | Modulus @ 100% elongation (psi) kPa | Tack Free Time(hours) | Peel Adhesion(% cohesive failure) |
|---|---|---|---|---|
| 6A | 0 | (57) 393 | 7 | 100 |
| 6B | 0.05 | (54) 372 | 7 | 100 |
| 6C | 0.1 | (49) 338 | 7 | 90 |
| 6D | 0.2 | (48) 331 | 7 | 95 |
| 6E | 0.3 | (45) 310 | 7 | 100 |
| 6F | 0.4 | (46) 317 | 7 | 100 |
| 6G | 0.5 | (44) 303 | 7 | 90 |
| 6H | 0.6 | (44) 303 | 7 | 90 |
| 6I | 0.7 | (42) 290 | 7 | 100 |
| 6J | 0.8 | (42) 290 | 10 | 95 |
| 6K | 0.9 | (41) 283 | 15 | 95 |
| 6L | 1.0 | (41) 283 | 36 | 95 |

EXAMPLE 7

Example 7 is analogous to Example 5G but 0.5 wt% of the silicone-polyether polymer of Example 1 wass combined with a variety of 4.5 micron $CaCO_3$/polydimethylsiloxane polymer levels as set forth below in TABLE IV. 100% modulus values, measured after a 7 day cure at standard conditions, and thixotropy, as determined by Boeing Flow (WPSTM E-48) are shown in TABLE IV.

TABLE IV

| Ex# | $CaCO_3$ (wt%) / PDMS (wt%) | Modulus @ 100% elongation (psi) KPa | E-48 Boeing Flow |
|---|---|---|---|
| 7A | 25/52.4 | (38) 262 | 0.8 |
| 7B | 30/47.4 | (39) 269 | 0.5 |
| 7C | 35/42.4 | (41) 283 | 0.35 |
| 7D | 40/37.4 | (43) 296 | 0.2 |
| 7E | 45/32.4 | (42) 290 | 0.1 |
| 7F | 50/27.4 | (49) 338 | 0.05 |
| 7G | 55/22.4 | (61) 421 | 0.02 |

(continued)

| Ex# | $CaCO_3$ (wt%) / PDMS (wt%) | Modulus @ 100% elongation (psi) KPa | E-48 Boeing Flow |
|---|---|---|---|
| 7H | 60/17.4 | (49) 338 | 0.01 |

As shown above in TABLE IV, target 100% modulus values are obtained when the amount of 4.5 micron CaCO3 present is in the range of 25-50 wt% of the composition. However, unacceptably high Boeing Flow results (i.e., >0.30 inch) are obtained if the amount of 4.5 $\mu$m (micron) $CaCO_3$ is less than 35 wt% of the composition.

EXAMPLE 8

Example 8 is analogous to Example 3G except that the polyether siloxane of Example 1 was replaced by a variety of alternate non-ionic silicone-polyether, 100% polyether/polyglycol surfactants at 0.5 wt. % level. WPSTM E-1 100% modulus values were measured for these formulations after a 7 day cure at standard conditions. The results are reported in TABLE V. As shown in TABLE V, only the polyether siloxane additives functioned as low modulus agents. The 100% carbon based polyether/polyglycol agents inhibited the condensation cure of the titanium catalyzed methoxy curing RTV compositions of Example 8.

TABLE V

| Modulus @ 100Elongation vs. Low Modulus Additive Type | | | |
|---|---|---|---|
| Low Modulus Additive | Type | Supplier | 100 % Modulus |
| SF1023 | Silicone-Polyether | GE Silicones | 45 |
| SF1550 | Silicone-Polyether | GE Silicones | 40 |
| SF1188A | Silicone-Polyether | GE Silicones | 42 |
| SF1388 | Silicone-Polyether | GE Silicones | 39 |
| SF1328 | Silicone-Polyether | GE Silicones | 49 |
| SF1528 | Silicone-Polyether | GE Silicones | 41 |
| Pluriol E-200 | Polyethylene Glycol | BASF | poor cure |
| Pluriol E-300 | Polyethylene Glycol | BASF | poor cure |
| Pluriol E-400 | Polyethylene Glycol | BASF | poor cure |
| Pluriol E-600 | Polyethylene Glycol | BASF | poor cure |
| Pluriol P-600 | Polyethylene Glycol | BASF | poor cure |
| Pluriol P-900 | Polyethylene Glycol | BASF | poor cure |
| Pluriol P-2000 | Polyethylene Glycol | BASF | poor cure |
| Pluriol P-4000 | Polyethylene Glycol | BASF | poor cure |
| Pluronic 25R2 | EO/PO block copolymer | BASF | poor cure |
| Pluronic 31R1 | EO/PO block copolymer | BASF | poor cure |
| Pluronic L44 | EO/PO block copolymer | BASF | poor cure |
| Pluronic L62 | EO/PO block copolymer | BASF | poor cure |
| Pluronic L64 | EO/PO block copolymer | BASF | poor cure |
| Pluronic L92 | EO/PO block copolymer | BASF | poor cure |
| Pluronic L101 | EO/PO block copolymer | BASF | poor cure |
| Pluracol P410 | Unknown Non-Ionic | BASF | poor cure |
| Pluracol 628 | Unknown Non-Ionic | BASF | poor cure |
| Pluracol 710 | Unknown Non-Ionic | BASF | poor cure |

(continued)

| Modulus @ 100Elongation vs. Low Modulus Additive Type | | | |
|---|---|---|---|
| Low Modulus Additive | Type | Supplier | 100 % Modulus |
| Pluracol 735 | Unknown Non-Ionic | BASF | poor cure |
| Pluracol 975 | Unknown Non-Ionic | BASF | poor cure |
| Pluracol 1010 | Unknown Non-Ionic | BASF | poor cure |
| Pluracol 250D | Unknown Non-Ionic | BASF | poor cure |
| Pluracol 4000D | Unknown Non-Ionic | BASF | poor cure |
| Pluracol W5100N | Polyalkoxy-Polyether | BASF | poor cure |
| Iconol TOA-9 | Tridecyl alcohol ethoxylate | BASF | poor cure |
| Tetronic 304 | EO/PO Ethylene diamine block copolymer | BASF | poor cure |
| Polytergent SLF-18 | Unknown Non-Ionic Olin | Olin | poor cure |
| Polytergent SL-22 | Unknown Non-Ionic Olin | Olin | poor cure |
| Polytergent SL-62 | Unknown Non-Ionic Olin | Olin | poor cure |
| Polytergent P-17-A | Unknown Non-Ionic Olin | Olin | poor cure |
| Colorsperse 188A | Dioleate | Henkel | poor cure |
| Emulan A | Unknown Non-Ion | BASF | poor cure |
| Emulan EL | Unknown Non-Ion | BASF | poor cure |
| Emulan OK5 | Ethoxylated alcohol | BASF | poor cure |
| Emulan ELP | Ethoxylated castor oil | BASF | poor cure |
| Emulan PO | Alkylphenol ethoxylate | BASF | poor cure |
| Liponic EG1 | Ethoxylate glycerine | LIPO | poor cure |
| Liponic EG7 | Ethoxylate glycerine | LIPO | poor cure |
| Liponate GC | Caprylic-capric triglyceride | LIPO | poor cure |
| Liponate PC | Propylene glycol dicaprylate | LIPO | poor cure |
| Lipocal L4 | Polyoxyethylen ether | LIPO | poor cure |
| Ucon LB 65 | EO/PO polyglycol | Union Carbide | poor cure |
| Ucon LB135 | EO/PO polyglycol | Union Carbide | poor cure |
| Ucon LB285 | EO/PO polyglycol | Union Carbide | poor cure |
| Triton X-100 | Ethylene oxide glycol | Union Carbide | poor cure |

EXAMPLES 9 AND 10

Example 9 is analogous to Example 6D, combining various levels of adhesion promoter tris-1,3,5-trimethoxysilylpropylisocyanurate with 4.5 μm (micron) CaCO3 and 0.20% of the polyether siloxane of Example 1, as set forth below in TABLE VI.

Example 10 is analogous to Example 3E, combining various levels of adhesion promoter with 10.0 μm (micron) CaCO3 in the absence of polyether siloxane, as set forth below in TABLE VI:

After standing for 4 days at room temperature, the compositions of Examples 9 and 10 were tested for modulus at 100% elongation (WPSTM E-1) after a 7 day cure at standard curing conditions. Results are given in TABLE VI.

TABLE VI

| Ex # | Adhesion promoter (wt%) | Modulus @ 100% Elongation (psi) kPa |
|---|---|---|
| 9A | 0 | (47) 324 |
| 9B | 0.10 | (46) 317 |
| 9C | 0.20 | (45) 310 |
| 9D | 0.30 | (48) 331 |
| 9E | 0.40 | (48) 331 |
| 9F | 0.50 | (45) 310 |
| 9G | 0.70 | (49) 338 |
| 9H | 0.90 | (46) 317 |
| 9I | 1.10 | (45) 310 |
| | | |
| 10A | 0 | (102) 703 |
| 10B | 0.10 | (102) 703 |
| 10C | 0.20 | (105) 724 |
| 10D | 0.30 | (117) 807 |
| 10E | 0.40 | (119) 820 |
| 10F | 0.50 | (124) 855 |
| 10G | 0.70 | (128) 883 |
| 10H | 0.90 | (129) 889 |
| 10I | 1.10 | (132) 910 |

The results for Example 9 show that the sealant modulus is unaffected by the poly-functional adhesion promoter level in the presence of 4.5 μm (micron) CaCO3 and polyether siloxane. The results for Example 10 show that the sealant modulus increases as the level of the polyfunctional adhesion promoter increases in the presence of 10 μm (micron) $CaCO_3$ and in the absence of polyether siloxane.

Peel adhesion was tested as follows. A layer of sealant composition was applied toa 2.54cmx 20.32cm (1 inch x 8 inch) substrate, and about 12.7cm (5 inches) of a 2.54cmx30.48cm (1 inch x 12 inch) 20 mesh stainless steel screen was applied over the layer of sealant composition, another layer of sealant composition was applied over the top of the screen and excess composition was then scraped off, and the samples allowed to cure. The screen was folded back over itself and the distal end of the substrate and the distal end of the screen were each clamped in a tensile tester. A razor blade was used to make a cut through the edge of the sealant layer exposed between the substrate and the screen, at an angle of about 45° to the substrate surface, and the specimen was then subjected to tension at a crosshead speed of 0.85mm/s (2 inches per minute). Two more 45° cuts were made in the sealant, each spaced apart from the immediately preceding cut by about 2.54cm (1 inch). The average tension, in kg/m (pounds per inch) of sample width, required to cause failure was recorded. The relative amount of cohesive failure was determined by visual inspection of failure surfaces of the test samples, based on the relative amount of originally coated area to which sealant remains bonded.

TABLE VII

| Substrate | (PPI) kg/m | % Cohesive failure |
|---|---|---|
| Glass | (35) 625 | 100 |
| Anodized aluminum | (36) 643 | 100 |
| Bare aluminum | (31) 554 | 75 |
| Concrete | (38) 679 | 75 |
| Galvanized steel | (30) 536 | 100 |

(continued)

| Substrate | (PPI) kg/m | % Cohesive failure |
|---|---|---|
| PVC | (35) 625 | 75 |
| Polycarbonate | (42) 750 | 100 |
| Polyacrylate | (48) 857 | 100 |

The composition of the present invention, when cured, exhibits both low modulus and high adhesion to a variety of substrates.

**Claims**

1. A one component, room temperature vulcanizable silicone sealant composition, comprising a cross-linkable organopolysiloxane polymer; a polyether siloxane; and a particulate calcium carbonate filler having an average particle size less than or equal to 4.5 μm (microns), and a condensation catalyst having the structural formula

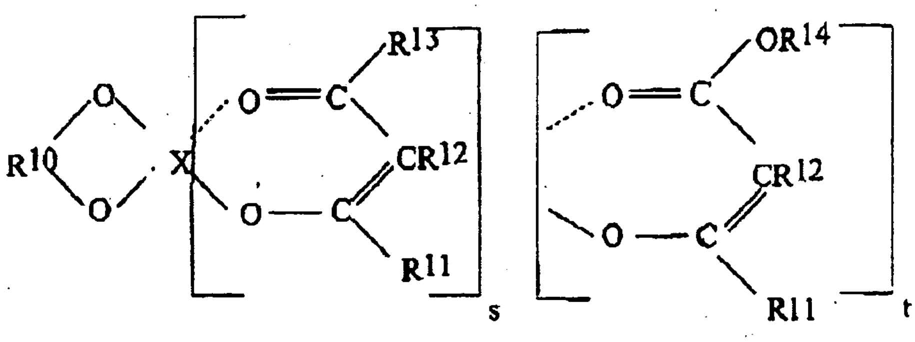

wherein:

X is titanium;
$R^{10}$ is a divalent, hydrocarbon radical of 2 to 10 carbon atoms, optionally substituted with halo, cyano, nitro, carboxyl, carboxyester, acyl halohydrocarbon and hydrocarbon substituents groups of up to 8 carbon atoms per group;
$R^{11}$ and $R^{13}$ are each independently a monovalent hydrocarbon radical selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;
$R^{12}$ is H or a monovalent hydrocarbon radical selected from $C_1$-$C_8$ alkyl, $C_5$-$C_{10}$ cylcloalkyl, vinyl, allyl, aryl selected from phenyl or naphthyl optionally substituted with one or more alkyl groups having from 1 to 6 carbon atoms per group and fluoroalkyl selected from fluoromethyl and trifluoropropyl;
$R^{14}$ is a monovalent hydrocarbon radical selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl, amino, ether, or a polyether group of the formula $(C_qH_{2q}O)_vR^{15}$;
$R^{15}$ is a monovalent hydrocarbon radical selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;
q and v are each integers, wherein $2 \leq q \leq 4$ and $1 \leq v \leq 20$; and
s and t are each numbers, wherein $0.7 \leq s \leq 1.3$ and $0.8 \leq t \leq 1.2$.

2. The composition of claim 1, wherein the composition comprises, based on 100 parts by weight of the crosslinkable organopolysiloxane polymer, from 100 parts by weight to 300 parts by weight, of the particulate calcium carbonate and from 0.03 parts by weight to 3.5 parts by weight of the polyether siloxane.

3. The composition of claim 1 wherein the crosslinkable organopolysiloxane comprises the product obtainable by reacting a silanol terminated diorganopoly- siloxane polymer and a polyfunctional silane.

4. The composition of claim 1, wherein the polyether siloxane comprises a compound according to structural formula:

$$M_b D_d D^*_e M^*_{2-b}$$

wherein:

M is $R^5{}_3SiO_{1/2}$;
D is $R^6{}_2SiO_{2/2}$;
M* is $R^7{}_3SiO_{1/2}$;
D* is $R^8{}_2SiO_{2/2}$;

each $R^5$ and $R^6$ is independently a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;
each $R^7$ is independently a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl; or $-(CH_2)_f-O-(C_2H_4O)_g-(C_3H_6O)_h-(C_jO_{2j}O)_i-R^9$, provided that at least one $R^7$ is $-(CH_2)_f-O-(C_2H_4O)_g-(C_3H_6O)_h-(C_jO_{2j}O)_i-R^9$;
each $R^6$ is independently a monovalent hydrocarbon group selected from $C_1$-$C_8$ alkyl, $C_1$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl; or $-(CH_2)_f-O-(C_2H_4O)_g-(C_3H_6O)_h-(C_jO_{2j}O)_i-R^9$, provided that at least one $R^8$ is $-(CH_2)_f-O-(C_2H_4O)_g-(C_3H_6O)_h-(C_jO_{2j}O)_i-R^9$;
$R^9$ is hydroxy, alkoxy or a monovalent hydrocarbon group selected from $C_1$-$C_8$ alkyl, $C_5$-$C_{10}$ cycloalkyl, allyl, vinyl, aryl selected from phenyl or naphthyl optionally substituted with one or more alkyl groups having from 1 to 6 carbon atoms per group and fluoroalkyl selected from fluoromethyl and trifluoropropyl;
b, d, e, f, g, h, i, j are each integers, wherein

$$0 \leq b \leq 2;$$

$$1 \leq d \leq 5;$$

$$1 \leq e \leq 5;$$

$$1 \leq f \leq 12;$$

$$0 \leq g \leq 15;$$

$$0 \leq h \leq 15$$

$$0 \leq i \leq 15;$$

and

$$4 \leq j \leq 8,$$

provided that $(g + h + i) \geq 1$.

5. The composition of claim 1, comprising from 0.1 to 10 pbw of the condensation cure catalyst.

6. The composition of claim any preceding, further comprising from 0.01 pwb to 2.0 pbw, based on 100 pbw of the diorganopolysiloxane of an adhesion promoter.

7. The composition of claim 6, wherein the adhesion promoter comprises a compound according to the structural formula:

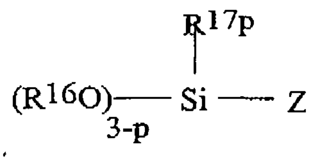

wherein:

$R^{16}$ and $R^{17}$ are each independently monovalent ($C_1$-$C_8$)hydrocarbon radicals,
Z is a saturated, unsaturated, or aromatic hydrocarbon radical, which may optionally be substituted with ether, epoxy, isocyanato, cyano, acryloxy, or acyloxy, and
p is an integer wherein $0 \leq p \leq 3$.

8. The composition of claim 6, wherein the adhesion promoter comprises a compound according to the structural formula:

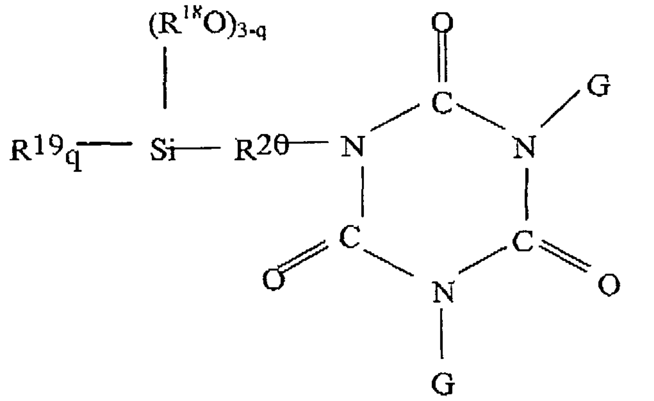

wherein
$R^{18}$ and $R^{19}$ are each independently alkyl, cycloalkyl, fluoroalkyl, cyanoalkyl, alkenyl or aryl;
$R^{20}$ is a divalent hydrocarbon radical selected from alkylenearylene, alkylene, cycloalkylone, each of which may optionally be substituted with one or more halo groups;
each G is independently $(R^{18}O)_{3-p}$ - $R^{19}_p$ - Si - $R^{20}$ -, styryl, vinyl, allyl, chloroallyl or cyclohexenyl;
q is an integer, wherein $0 \leq q \leq 3$.

9. A method for sealing a gap between a first substrate and a second substrate, wherein the second substrate is spaced apart from the first substrate to thereby form the gap, comprising applying the one component, room temperature vulcanizable silicone sealant composition of claim 1 and allowing the composition to cure.

**10.** An assembly, comprising a first substrate, a second substrate, spaced apart from the first substrate, and a silicone elastomer which is the cured silicone sealant composition of claim 1.

## Patentansprüche

**1.** Bei Raumtemperatur vulkanisierbare Einkomponenten-Silikondichtstoffzusammensetzung, welche umfasst: ein quervernetzbares Organopolysiloxan-Polymer; ein Polyether-Siloxan; und einen partikulären Calciumcarbonatfüllstoff mit einer durchschnittlichen Partikelgröße von kleiner oder gleich 4,5 μm (Mikron) und einen Kondensationskatalysator mit der Strukturformel

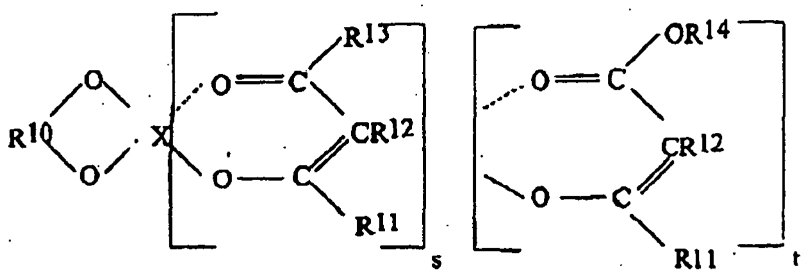

wobei:

X Titan ist;
$R^{10}$ ein divalentes Kohlenwasserstoffradikal von 2 bis 10 Kohlenstoffatomen ist, das optional mit Halo-, Cyano-, Nitro-, Carboxyl-, Carboxyester-, Acylhalokohlenwasserstoff- und Kohlenwasserstoffsubstituentengruppen von bis zu 8 Kohlenstoffatomen pro Gruppe substituiert ist;
$R^{11}$ und $R^{13}$ jeweils unabhängig ein monovalentes Kohlenwasserstoffradikal gewählt aus $C_1$-$C_8$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe und Fluoralkyl gewählt aus Fluormethyl und Trifluorpropyl sind;
$R^{12}$ H oder ein monovalentes Kohlenwasserstoffradikal gewählt aus $C_1$-$C_8$-Alkyl, $C_5$-$C_{10}$-Cycloalkyl, Vinyl, Allyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl ist;
$R^{14}$ ein monovalentes Kohlenwasserstoffradikal gewählt aus $C_1$-$C_8$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl, Amino, Ether oder einer Polyethergruppe der Formel $(C_qH_{2q}O)_vR^{15}$ ist;
$R^{15}$ ein monovalentes Kohlenwasserstoffradikal gewählt aus $C_1$-$C_8$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl ist;
q und v jeweils ganze Zahlen sind, wobei $2 \leq q \leq 4$ und $1 \leq v \leq 20$; und
s und t jeweils Zahlen sind, wobei $0{,}7 \leq s \leq 1{,}3$ und $0{,}8 \leq t \leq 1{,}2$.

**2.** Zusammensetzung nach Anspruch 1, **dadurch gekennzeichnet, dass** die Zusammensetzung beruhend auf 100 Gewichtsteilen des quervernetzbaren Organopolysiloxan-Polymers 100 Gewichtsteile bis 300 Gewichtsteile des partikulären Calciumcarbonats und 0,03 Gewichtsteile bis 3,5 Gewichtsteile des Polyethersiloxans umfasst.

**3.** Zusammensetzung nach Anspruch 1, **dadurch gekennzeichnet, dass** das quervernetzbare Organopolysiloxan das durch Reagieren eines silanolendständigen Diorganopoly-Siloxanpolymers und eines polyfunktionellen Silans erhaltbare Produkt umfasst.

**4.** Zusammensetzung nach Anspruch 1, **dadurch gekennzeichnet, dass** das Polyethersiloxan eine Verbindung gemäß der Strukturformel:

$$M_bD_dD^*_eM^*_{2-b}$$

umfasst,
wobei:

M $R^5_3SiO_{1/2}$ ist;
D $R^6_2SiO_{2/2}$ ist;
M* $R^7_3SiO_{1/2}$ ist;
D* $R^8_2S{:}O_{2/2}$ ist;
wobei $R^5$ und $R^6$ jeweils unabhängig eine monovalente Kohlenwasserstoffgruppe gewählt aus $C_1$-$C_M$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl ist;
jedes $R^7$ unabhängig eine monovalente Kohlenwasserstoffgruppe gewählt aus $C_1$-$C_8$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl ist; oder $-(CH_2)_f-O-(C_2H_4O)_g-(C_3H_6O)_h-(C_jO_{2j}O)_i-R^9$, vorausgesetzt, dass mindestens ein $R^7$ $-(CH_2)_f-O-(C_2H_4O)_g-(C_3H_6O)_h-(C_jO_{2j}O)_i-R^9$ ist;
jedes $R^8$ unabhängig eine monovalente Kohlenwasserstoffgruppe gewählt aus $C_1$-$C_8$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl ist; oder $-(CH_2)_f-O-(C_2H_4O)_g-(C_3H_6O)_h-(C_jO_{2j}O)_i-R^9$, vorausgesetzt, dass mindestens ein $R^8$ $-(CH_2)_f-O-(C_2H_4O)_g-(C_3H_6O)_h-(C_jO_{2j}O)_i-R^9$ ist;
$R^9$ Hydroxy, Alkoxy oder eine monovalente Kohlenwasserstoffgruppe gewählt aus $C_1$-$C_8$-Alkyl, $C_5$-$C_{10}$-Cycloalkyl, Allyl, Vinyl, Aryl gewählt aus Phenyl oder Naphthyl, optional substituiert mit einer oder mehreren Alkylgruppen mit 1 bis 6 Kohlenstoffatomen pro Gruppe, und Fluoralkyl gewählt aus Fluormethyl und Trifluorpropyl ist;
b, d, e, f, g, h, i, j jeweils ganze Zahlen sind, wobei

$$0 \leq b \leq 2;$$

$$1 \leq d \leq 5;$$

$$1 \leq e \leq 5;$$

$$1 \leq f \leq 12;$$

$$0 \leq g \leq 15;$$

$$0 \leq h \leq 15;$$

und

$$4 \leq j \leq 8,$$

vorausgesetzt, dass $(g + h + i) \geq 1$.

**5.** Zusammensetzung nach Anspruch 1, welche 0,1 bis 10 Gewichtsteile des Kondensationsaushärtungskatalysators umfasst.

**6.** Zusammensetzung nach einem der vorstehenden Ansprüche, welche weiterhin beruhend auf 100 Gewichtsteilen des Diorganopolysiloxans 0,01 Gewichtsteile bis 2,0 Gewichtsteile eines Adhäsionsbeschleunigers umfasst.

7. Zusammensetzung nach Anspruch 6, **dadurch gekennzeichnet, dass** der Adhäsionsbeschleuniger eine Verbindung gemäß der Strukturformel:

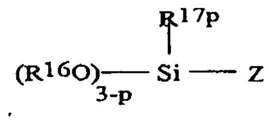

umfasst,
wobei:

$R^{16}$ und $R^{17}$ jeweils unabhängig monovalente $(C_1\text{-}C_8)$Kohlenwasserstoffradikale sind,
Z ein gesättigtes, ungesättigtes oder aromatisches Kohlenwasserstoffradikal ist, das optional mit Ether, Epoxy, Isocyanato, Cyano, Acryloxy oder Acyloxy substituiert sein kann, und
p eine ganze Zahl ist, wobei $0 \leq p \leq 3$.

8. Zusammensetzung nach Anspruch 6, **dadurch gekennzeichnet, dass** der Adhäsionsbeschleuniger eine Verbindung gemäß der Strukturformel:

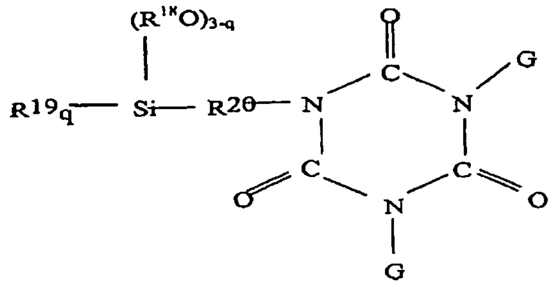

umfasst,
wobei:

$R^{18}$ und $R^{19}$ jeweils unabhängig Alkyl, Cycloalkyl, Fluoralkyl, Cyanoalkyl, Alkenyl oder Aryl sind;
$R^{20}$ ein divalentes Kohlenwasserstoffradikal gewählt aus Alkylenarylen, Alkylen, Cycloalkylen ist, die jeweils optional mit einer oder mehreren Halo-Gruppen substituiert sein können;
jedes G unabhängig $(R^{18}O)_{3-p}$ - $R^{19}_p$ - Si - $R^{20}$ -, Styryl, Vinyl, Allyl, Chlorallyl oder Cyclohexenyl ist;
q eine ganze Zahl ist, wobei $0 \leq q \leq 3$.

9. Verfahren zum Abdichten eines Spalts zwischen einem ersten Substrat und einem zweiten Substrat, wobei das zweite Substrat von dem ersten Substrat beabstandet ist, um **dadurch** den Spalt zu bilden, welches umfasst: Aufbringen der bei Raumtemperatur vulkanisierbaren Einkomponenten-Silikondichtstoffzusammensetzung nach Anspruch 1 und Aushärtenlassen der Zusammensetzung.

10. Anordnung, welche ein erstens Substrat, ein von dem ersten Substrat beabstandetes zweites Substrat und ein Silikonelastomer umfasst, das die gehärtete Silikondichtstoffzusammensetzung von Anspruch 1 ist.

**Revendications**

1. Composition d'étanchéité monocomposante de silicone durcissable à température ambiante, comprenant un polymère d'organopolysiloxane réticulable; un siloxane de polyéther; et une charge de carbonate de calcium particulaire d'une taille de particule moyenne inférieure ou égale à 4,5 μm (microns), et un catalyseur de condensation de la formule structurelle

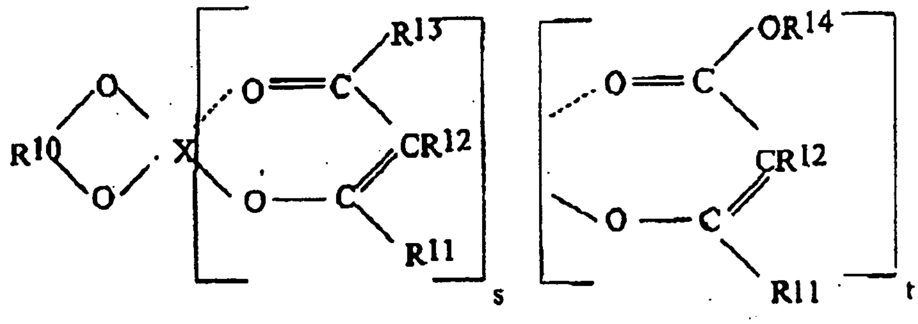

où:

X est titane;
$R^{10}$ est un radical d'hydrocarbure divalent de 2 à 10 atomes de carbone, optionnellement substitué par halo, cyano, nitro, carboxyle, carboxyester, halohydrocarbure d'acyle et des groupes substituants d'hydrocarbure jusqu'à 8 atomes de carbone par groupe;
$R^{11}$ et $R^{13}$ sont chacun indépendamment un radical hydrocarbure monovalent sélectionné parmi alkyle $C_1$-$C_8$, cycloalkyle $C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle;
$R^{12}$ est H ou un radical hydrocarbure monovalent sélectionné parmi alkyle$C_1$-$C_8$, cycloalkyle$C_5$-$C_{10}$, vinyle, allyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle;
$R^{14}$ est un radical hydrocarbure monovalent sélectionné parmi alkyle $C_1$-$C_8$, cycloalkyle $C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle, amino, éther, ou un groupe polyéther de la formule $(C_qH_{2q}O)_vR^{15}$;
$R^{15}$ est un radical hydrocarbure monovalent sélectionné parmi alkyle$C_1$-$C_8$, cycloalkyle$C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle;
q et v sont chacun des entiers, où $2 \leq q \leq 4$ et $1 \leq v \leq 20$; et
s et t sont chacun des nombres, où $0,7 \leq s \leq 1,3$ et $0,8 \leq t \leq 1,2$.

**2.** Composition selon la revendication 1, où la composition comprend, basée sur 100 parties en poids du polymère d'organopolysiloxane réticulable, de 100 parties en poids à 300 parties en poids du carbonate de calcium particulaire et de 0,03 partie en poids à 3,5 parties en poids du polyéther siloxane.

**3.** Composition selon la revendication 1, où l'organopolysiloxane réticulable comprend le produit pouvant être obtenu par la réaction d'un polymère de diorganopolysiloxane à terminaison silanol et un silane polyfonctionnel.

**4.** Composition selon la revendication 1, où le polyéther siloxane comprend un composé selon la formule structurelle:

$$M_b\, D_d\, D^*_e\, M^*_{2-b}\, M_b\, D_d\, D^*_e\, M^*_{2-b}$$

où:

M est $R^5{}_3SiO_{1/2}$,
D est $R^6{}_2SiO_{2/2}$;
M* est $R^7{}_3SiO_{1/2}$;
D* est $R^8{}_2SiO_{2/2}$;

chaque $R^5$ et $R^6$ est indépendamment un groupe hydrocarbure monovalent sélectionné parmi alkyle $C_1$-$C_8$, cycloalkyle $C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle;

chaque $R^7$ est indépendamment un groupe hydrocarbure monovalent sélectionné parmi alkyle $C_1$-$C_8$, cycloalkyle $C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle; ou

$-(CH_2)_f-O-(C_2H_4O)_g-(C_3H_6O)_n-(C_jO_{2j}O)i-R^9$, à condition qu'au moins un $R^7$ soit $-(CH_2)_f-O-(C_2H_4O)_g-(C_3H_6O)_n-(C_jO_{2j}O)_i-R^9$;

chaque $R^8$ est indépendamment un groupe hydrocarbure monovalent sélectionné parmi alkyle$C_1$-$C_8$, cycloalkyle $C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle; ou

$-(CH_2)_f-O-(C_2H_4O)_g-(C_3H_6O)_n(C_jO_{2j}O)_i-R^9$, à condition qu'au moins un $R^8$ soit $-(CH_2)_f-O-(C_2H_4O)_g-(C_3H_6O)_n-(C_jO_{2j}O)_i-R^9$;

$R^9$ est hydroxy, alcoxy ou un groupe hydrocarbure monovalent sélectionné parmi alkyle $C_1$-$C_8$, cycloalkyle $C_5$-$C_{10}$, allyle, vinyle, aryle sélectionné parmi phényle ou naphtyle optionnellement substitué par un ou plusieurs groupes alkyle ayant de 1 à 6 atomes de carbone par groupe et fluoroalkyle sélectionné parmi fluorométhyle et trifluoropropyle;

b, d, e, f, g, h, i, j sont chacun des entiers, où

$$0 \leq b \leq 2;$$

$$1 \leq d \leq 5;$$

$$1 \leq e \leq 5;$$

$$1 \leq f \leq 12;$$

$$0 \leq g \leq 15;$$

$$0 \leq h \leq 15;$$

$$0 \leq i \leq 15;$$

et

$$4 \leq j \leq 8,$$

à condition que $(g + h + i) \geq 1$.

**5.** Composition selon la revendication 1, comprenant de 0,1 à 10 pour cent en poids du catalyseur durcissant de condensation.

**6.** Composition selon l'une quelconque des revendications précédentes, comprenant en outre de 0,01 pour cent en poids à 2,0 pour cent en poids, basé sur 100 pour cent en poids du diorganopolysiloxane d'un promoteur d'adhésion.

**7.** Composition selon la revendication 6, où le promoteur d'adhésion comprend un composé selon la formule structurelle:

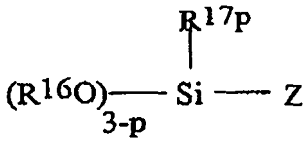

où:

$R^{16}$ et $R^{17}$ sont chacun indépendamment des radicaux hydrocarbures ($C_1$-$C_8$) monovalents,
Z est un radical hydrocarbure saturé, non saturé ou aromatique, qui peut optionnellement être substitué par éther, époxy, isocyanato, cyano, acryloxy ou acyloxy; et
p est un entier où $0 \leq p \leq 3$.

**8.** Composition selon la revendication 6, dans laquelle le promoteur d'adhésion comprend un composé selon la formule structurelle:

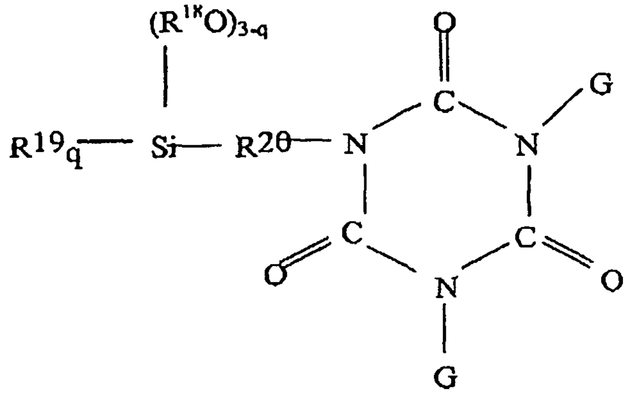

où
$R^{18}$ et $R^{19}$ sont chacun indépendamment alkyle, cycloalkyle, fluoroalkyle, cyanoalkyle, alcényle ou aryle;
$R^{20}$ est un radical hydrocarbure divalent sélectionné parmi alkylènearylène, alkylène, cycloalkylène, chacun pouvant être optionnellement substitué par un ou plusieurs groupes halo;
chaque G est indépendamment $(R^{18}O)_{3-p}$-$R^{19}{}_p$-Si-$R^{20}$-, styryle, vinyle, allyle, chloroallyle ou cyclohexényle;
q est un entier, où $0 \leq q \leq 3$.

**9.** Méthode pour rendre étanche un espace entre un premier substrat et un deuxième substrat, où le deuxième substrat est espacé du premier substrat pour former ainsi l'espace, comprenant l'application de la composition d'étanchéité monocomposante de silicone vulcanisable à température ambiante selon la revendication 1 et permettant à la composition de durcir.

**10.** Ensemble, comprenant un premier substrat, un deuxième substrat, espacé du premier substrat, et un élastomère de silicone qui est la composition d'étanchéité de silicone durcie de la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4323489 A
- US 4810748 A
- EP 0507177 A
- EP 0384609 A
- JP 04142373 A
- US 3689454 A
- US 3779986 A
- US 4528353 A